(19) Europäisches Patentamt
European Patent Office
Office européen des brevets

(11) **EP 2 169 364 A2**

(12) **EUROPÄISCHE PATENTANMELDUNG**

(43) Veröffentlichungstag:
**31.03.2010 Patentblatt 2010/13**

(51) Int Cl.:
***G01G 19/08*** *(2006.01)*

(21) Anmeldenummer: **09011801.9**

(22) Anmeldetag: **16.09.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(30) Priorität: **30.09.2008 DE 102008049766**

(71) Anmelder: **GM Global Technology Operations, Inc.**
**Detroit, MI 48265-3000 (US)**

(72) Erfinder:
• **Kanning, Torsten**
  **65346 Eltville-Erbach (DE)**
• **Illium, Justus**
  **55130 Mainz (DE)**

(74) Vertreter: **Strauss, Peter**
**Gewerblicher Rechtschutz Patentrecht**
**IPC: A0-02**
**65423 Rüsselsheim (DE)**

(54) **Verfahren und Messeinheit zur Bestimmung des Gewichts eines Fahrzeugs**

(57)     Es wird ein Verfahren zur Bestimmung des Gewichts (G) eines Fahrzeugs (1) sowie eine Messeinheit (5) zur Durchführung dieses Verfahrens angegeben. In einem ersten Schritt a) wird die auf die Räder (2a, 2d) des Fahrzeuges (1) wirkende Umfangskraft (F) oder eines damit in Zusammenhang stehenden Parameters erfasst. In einem zweiten Schritt b) wird zumindest eine Auswirkung auf das Fahrzeug (1) erfasst, welche durch die einwirkende Umfangskraft (F) begründet ist. Schließlich wird in einem dritten Schritt c) das Fahrzeuggewicht (G) aus den erfassten Daten berechnet.

Fig. 1

EP 2 169 364 A2

**Beschreibung**

Die Erfindung betrifft ein Verfahren zur Bestimmung des Gewichts eines Fahrzeugs. Weiterhin betrifft die Erfindung eine Messeinheit zur Bestimmung des Gewichts eines Fahrzeugs.

Stark beladene und überladene Fahrzeuge stellen durch ein schlechteres Fahrverhalten ein erhöhtes Risiko im Straßenverkehr dar. Beispielsweise wird der Bremsweg verlängert und das Fahrzeug neigt verstärkt zum Kippen und zum Schleudern. Darüber hinaus stellt eine Überladung eine unzulässige Belastung der Struktur des Fahrzeuges dar, welche im Extremfall zur Beschädigung desselben führen kann. Beispielsweise können der Fahrzeugrahmen und die Stoßdämpfer Schaden nehmen. Aber auch der Antriebsstrang ist durch die erhöhten Antriebskräfte gefährdet. Achsbrüche, Motorschäden und Getriebeschäden können die Folge sein. Neben dem Sachschaden, der durch Überladung eines Fahrzeuges droht, ist - noch schlimmer - auch eine Schädigung von Personen möglich.

Oft wissen die Fahrer nicht, wie stark das Fahrzeug beladen oder sogar überladen ist. Die wenigsten wissen überhaupt über die zulässige Zuladung ihres Fahrzeuges Bescheid. Daher existieren Systeme, welche die Beladung eines Fahrzeuges ermitteln und gegebenenfalls den Fahrer über eine gefährliche Beladung oder Überladung informieren, um die angesprochenen nachteiligen Auswirkungen frühzeitig zu vermeiden. Hierfür existieren mehrere Ansätze.

Die DE 10 2006 033 951 A1 offenbart dazu beispielsweise eine Vorrichtung zur Bestimmung einer Radlast eines Reifens eines Kraftwagens mit mindestens einer innerhalb des Reifens angeordneten ersten Sensoreinheit, welche zur Bestimmung von den Reifenfülldruck charakterisierenden Messwerten ausgebildet ist. Darüber hinaus umfasst die Vorrichtung mindestens eine Datenübertragungseinheit, welche zur Übertragung der Messwerte ausgebildet ist, und mindestens eine Auswerteeinrichtung zur Bestimmung der Radlast des Reifens unter Berücksichtigung der von der Datenübertragungseinheit übermittelten Messwerte. Die erste Sensoreinheit umfasst dabei einen Drucksensor, mit welchem zumindest der Reifenfülldruck des Reifens unabhängig von einer Reifenumdrehungsgeschwindigkeit bestimmt werden kann.

Die DE 103 41 132 A1 offenbart eine Beladungsanzeige für einen aktuellen Beladungszustand eines Fahrzeuges, wobei für jedes Rad des Fahrzeuges eine aktuelle gewichtsbedingte Radlast im Bereich einer Radaufhängung erfasst wird. Dabei weist die Beladungsanzeige eine Mehrquadrantendarstellung auf, wobei in jedem Quadranten die aktuelle Radlast für jeweils ein Rad angezeigt ist und die Quadranten entsprechend der Radposition im Fahrzeug angeordnet sind.

Die DE 44 08 762 offenbart darüber hinaus, dass eine Fahrzeuglastmessvorrichtung eine Gleitplatte umfasst, die auf der oberen Oberfläche eines Achsgehäuses montiert ist, wobei eine Fahrzeuglast über eine Blattfeder auf die Gleitplatte wirkt und die Gleitplatte einen Anordnungsbereich an ihrer inneren Oberfläche umfasst und eine Sensorvorrichtung in den Anordnungsbereich eingepasst und dort fixiert ist.

Weiterhin ist aus der DE 195 36 688 C2 ein System zur Anzeige des Gewichts einer Fahrzeugladung bekannt, welches eine Gewichtsberechnungseinrichtung umfasst, die das Ladungsgewicht aus Ausgangssignalen von im Fahrzeug installierten Sensoren ermittelt. Das System umfasst weiterhin eine Anzeigevorrichtung zur Anzeige des durch die Gewichtsberechnungseinrichtung ermittelten Ladungsgewichts und eine Anzeigesteuereinrichtung, welche die Anzeigevorrichtung während einer Fahrt so steuert, dass die Anzeigevorrichtung das vor der Fahrt ermittelte Ladungsgewicht anzeigt.

Aus der DE 10 2004 031 224 A1 ist auch ein Dachträgersystem für ein Personenkraftfahrzeug bekannt, welches die auf den Dachträger wirkende Last ermittelt. Das System umfasst einen Lastenträger, der an einer fahrzeugseitigen Tragstruktur des Fahrzeugdachs montiert werden kann, um daran eine Dachlast zu befestigen, sowie eine dem Lastenträger zugeordnete Sensoreinrichtung zur Erfassung der durch die Dachlast hervorgerufenen und auf die Tragstruktur eingeleiteten Kräfte. Eine Auswerteeinrichtung wertet die von den Sensorelementen gelieferten Messsignale aus, um eine Überladung und/oder eine ungünstige Lastverteilung festzustellen und den Fahrzeugführer darüber zu informieren.

Schließlich sind auch Systeme bekannt, die das Fahrzeuggewicht indirekt über die Bestimmung der Leuchtweite der Frontscheinwerfer des Fahrzeuges ermitteln. Diese Systeme machen sich den Umstand zu Nutze, dass die Achslasten bei Beladung üblicherweise nicht gleichmäßig ansteigen, da - zumindest bei der Mehrzahl der Fahrzeuge - der Kofferraum hinten angeordnet ist und daher die Hinterachse stärker belastet wird. Bei Beladung wird daher die Leuchtweite der Scheinwerfer erhöht.

Je nach verwendetem System beinhaltet die Ermittlung des Fahrzeuggewichts die Verwendung von Sensoren, welche mehr oder weniger genau auf diesen Zweck ausgerichtet sind, also beispielsweise von Kraftsensoren. Damit ist aber ein Zusatzaufwand bei der Herstellung eines Fahrzeuges sowie eine erhöhte Fehleranfälligkeit desselben verbunden.

Aufgabe der vorliegenden Erfindung ist es daher, ein Verfahren sowie ein System zur Ermittlung eines Fahrzeuggewichts anzugeben, welches mit geringem technischen Aufwand ausgeführt werden kann.

Erfindungsgemäß wird diese Aufgabe durch ein Verfahren mit den Merkmalen des Patentanspruchs 1 und/oder durch eine Messeinheit mit den Merkmalen des Patentanspruchs 9 gelöst.

Demgemäss umfasst ein Verfahren zur Bestimmung des Gewichts eines Fahrzeugs die Schritte:

a) Erfassen einer auf die Räder des Fahrzeuges wirkenden Umfangskraft oder eines damit in Zusammenhang stehenden Parameters;

b) Erfassen zumindest einer Auswirkung auf das Fahrzeug, welche durch die einwirkende Umfangskraft begründet ist und

c) Berechnen des Fahrzeuggewichts aus den erfassten Daten.

Demgemäss ist weiterhin eine Messeinheit zur Bestimmung des Gewichts eines Fahrzeugs vorgesehen, umfassend:

a) Mittel zum Erfassen einer auf die Räder des Fahrzeuges wirkenden Umfangskraft oder eines damit in Zusammenhang stehenden Parameters;

b) Mittel zum Erfassen zumindest einer Auswirkung auf das Fahrzeug, welche durch die einwirkende Umfangskraft begründet ist und

c) Mittel zum Berechnen des Fahrzeuggewichts aus den erfassten Daten.

Vorteilhaft müssen für die Ermittlung des Gesamtgewichts normalerweise keine zusätzlichen Sensoren im Fahrzeug verbaut werden, da ein modernes Fahrzeug ohnehin mit einer Fülle von Sensoren ausgestattet sind, mit denen eine Auswirkung auf das Fahrzeug, welche durch die einwirkende Umfangskraft begründet ist, gemessen werden kann. Spezielle Gewichtssensoren können daher im Regelfall entfallen.

Während bekannte Systeme zur Ermittlung des Fahrzeuggewichts in einem statischen Betriebszustand arbeiten, das heißt überwiegend im Stillstand, wird das Gesamtgewicht erfindungsgemäß in einem *dynamischen* Betriebszustand des Fahrzeugs ermittelt, das heißt während das Fahrzeug beschleunigt oder verzögert wird. Häufig ist die Genauigkeit von Sensoren durch Nichtlinearitäten, durch einen Offset vom Nullpunkt, sowie durch Hystereseeffekte eingeschränkt. Die Auswertung eines solchen Sensorsignals in einem statischen Betriebszustands des Fahrzeuges führt daher mit hoher Wahrscheinlichkeit zu einem verfälschten Messergebnis wohingegen die *Änderung* des Sensorsignals normalerweise eine relativ genaue Bestimmung des tatsächlichen Messwerts ermöglicht.

Vorteilhafte Ausgestaltungen und Weiterbildungen der Erfindung ergeben sich aus den Unteransprüchen sowie aus der Beschreibung in Zusammenschau mit den Figuren der Zeichnung.

Vorteilhaft ist es, wenn als ein mit der Umfangskraft in Zusammenhang stehender Parameter einer oder mehrere aus der Gruppe: Motordrehmoment, Motorleistung, Getriebedrehmoment, Gaspedalstellung, Kraftstoffeinspritzmenge, Ansaugluftmenge, Druckverlust im Luftfilter, Turboladerdruck, eingelegter Gang, Bremsdruck, Kraft am Bremspedal oder Temperatur der Bremsen vorgesehen ist. Messwerte für diese Parameter stehen in modernen Fahrzeugen oft ohnehin zur Verfügung und erlauben eine Berechnung oder zumindest eine Abschätzung der Umfangskräfte der Räder. Somit können diese Messwerte einen Mehrfachnutzen erbringen. Wenn der Zusammenhang zwischen Parameter und Umfangskraft nicht oder nur schwer formelmäßig erfasst werden kann, ist es auch möglich, diesen Zusammenhang empirisch zu ermitteln und zum Beispiel in (mehrdimensionalen) Tabellen abzuspeichern. Da die angesprochenen Messwerte unter Umständen stark schwanken können ist auch die Auswertung statistischer Parameter, zum Beispiel eines zeitlichen Mittelwerts möglich.

Vorteilhaft ist es auch, wenn als Auswirkung auf das Fahrzeug eine oder mehrere aus der Gruppe: Längsbeschleunigung, Veränderung der Radlast, Veränderung der Achslast, Änderung eines Einfederwegs an einem passiven Stoßdämpfer, Kraftänderung in einem aktiven Stoßdämpfer, Änderung der Leuchtweite eines Scheinwerfers vorgesehen ist. Sensoren zur Messung der angesprochenen Auswirkungen stehen in modernen Fahrzeugen ebenfalls häufig zur Verfügung. Zum Beispiel können Regelparameter in einem aktiven Stoßdämpfersystem darüber Auskunft geben, welche Radlast auf ein bestimmtes Rad wirkt. Da beim Beschleunigen des Fahrzeugs die Hinterachse stärker, die Vorderachse dagegen leichter belastet wird, kann durch die Laständerung die genannte Auswirkung auf das Fahrzeug bestimmt werden. Auch hier können die angesprochenen Messwerte gegebenenfalls stark schwanken, sodass eine Auswertung statistischer Parameter, zum Beispiel eines zeitlichen Mittelwerts vorteilhaft sein kann.

Günstig ist es, wenn anstelle der auf die Räder des Fahrzeugs wirkenden Umfangskraft oder eines damit in Zusammenhang stehenden Parameters dessen zeitliche Veränderung erfasst wird. Beispielsweise, werden die Umfangskraft oder zugeordneter Parameter beim ruckartigen Gasgeben erfasst. Aus der Differenz der Antriebskraft kann - etwa mit einer gemessenen Längsbeschleunigung - leicht das Fahrzeuggewicht errechnet werden.

Günstig ist es weiterhin, wenn bei der Berechnung der Fahrzeuggewichts die Geschwindigkeit des Fahrzeuges berücksichtigt wird. Insbesondere bei höheren Geschwindigkeiten muss ein Großteil der potentiell verfügbaren Antriebskraft für die Überwindung des Windwiderstands des Fahrzeugs aufgewendet werden. Dementsprechend steht für die Beschleunigung des Fahrzeugs nur mehr ein relativ kleiner Teil der Motorleistung zur Verfügung. Vorteilhaft ist es daher insbesondere, das Gesamtgewicht bei niedrigen Geschwindigkeiten zu ermitteln.

Günstig ist es weiterhin, wenn die Steigung der Fahrbahn, auf dem sich das Fahrzeug befindet, mit Hilfe eines Neigungssensors oder mit Hilfe von Daten eines Navigationssystems des Fahrzeuges erfasst und bei der Berechnung der Fahrzeuggewichts berücksichtigt wird. Ähnlich wie bei Fahrten mit hoher Geschwindigkeit wird bei einer Bergauffahrt ein Großteil der Antriebskraft zur Überwindung der Hangabtriebskraft aufgewendet, weswegen für die Beschleunigung des Fahrzeugs nur ein kleiner Teil der Motorleistung zur Verfügung steht. Bergauffahrten sind daher ebenfalls weniger geeignet, das Gesamtgewicht des Fahrzeugs zu ermitteln.

Günstig ist es schließlich, wenn bei der Berechnung der Fahrzeuggewichts Lenkkräfte berücksichtigt werden. Eine hohe Beladung des Fahrzeugs verursacht höhere Lenkkräfte, welche beispielsweise über die Servolenkung ermittelt werden können. Diese Information kann ebenfalls in den Algorithmus zur Ermittlung des Fahrzeuggewichts einfließen.

In einer vorteilhaften Ausgestaltung der Erfindung werden bei Überschreiten eines Grenzwerts für das Fahrzeuggewicht eine oder mehrer Maßnahmen aus der Gruppe: Ausgabe eines Warnhinweises an den Fahrer, Begrenzung der Höchstgeschwindigkeit des Fahrzeugs, Adaptierung eines Antiblockiersystems, Adaptierung eines Elektronischen Stabilitätsprogramms, Adaptierung der Lenkung, Verändern der von einem Gaspedal erzeugten Gegenkraft, Verändern der von einem Bremspedal erzeugten Gegenkraft oder Außerbetriebnahme des Fahrzeuges getroffen. In manchen Situationen, etwa bei hoher aber noch zulässiger Beladung, wird ein Hinweis an den Fahrer als Maßnahme ausreichen. Bei noch höherer Beladung werden auch andere Maßnahmen angebracht sein, etwa die Limitierung der Höchstgeschwindigkeit des Fahrzeugs. Auch ein Eingriff in ein Elektronischen Stabilitätsprogramm (ESP) und die Deaktivierung eines Sportmodus des Fahrzeuges ist denkbar. Dabei steht jeweils die Erhöhung der Verkehrssicherheit und die Vermeidung von Überlastungen der einzelnen Fahrzeugkomponenten im Vordergrund. Die angeführten Beispiele stellen dabei lediglich einen Ausschnitt aus den vielen Möglichkeiten dar. Das Auffinden weiterer Maßnahmen ist für den Fachmann dabei leicht möglich.

Bei einem erfindungsgemäßen Meßsystem ist es schließlich günstig, wenn die Mittel zum Berechnen des Fahrzeuggewichts in einem Halbleiterbaustein angeordnet sind und die Erfassungsmittel zumindest einen Eingang und/oder eine Funkempfangsmodul desselben darstellen. Halbleiterbausteine sind klein, ausfallsicher und leicht verfügbar. Deshalb ist es günstig, die erfindungsgemäßen Funktionen in einem solchen Halbleiterbaustein, etwa einem Mikroprozessor mit Speicher, ablaufen zu lassen. Aber auch eine Integration des erfindungsgemäßen Verfahrens, beziehungsweise der dazu nötigen Mittel, in eine ohnehin vorhandene Bordelektronik ist möglich. Die Sensoren werden dabei über Kabel oder eine Funkschnittstelle an die Messeinheit angebunden. Selbstverständlich können die angesprochenen Sensoren auch der Messeinheit zugehörig sein und bilden dann selbst die Erfassungsmittel.

An dieser Stelle wird darauf hingewiesen, dass sich die Vorteile des erfindungsgemäßen Verfahrens gleichermaßen auf die erfindungsgemäße Messeinheit beziehen und umgekehrt.

Die obigen Ausgestaltungen und Weiterbildungen der Erfindung lassen sich auf beliebige Art und Weise kombinieren.

Die vorliegende Erfindung wird nachfolgend anhand der in den schematischen Figuren der Zeichnung angegebenen Ausführungsbeispiele näher erläutert. Es zeigen dabei:

Fig. 1   ein Fahrzeug und die auf das Fahrzeug einwirkenden Kräfte

Fig. 2   ein Fahrzeug mit einer erfindungsgemäßen Messeinheit

In den Figuren der Zeichnung sind gleiche und funktionsgleiche Elemente und Merkmale - sofern nichts Anderes ausgeführt ist - mit denselben Bezugszeichen versehen.

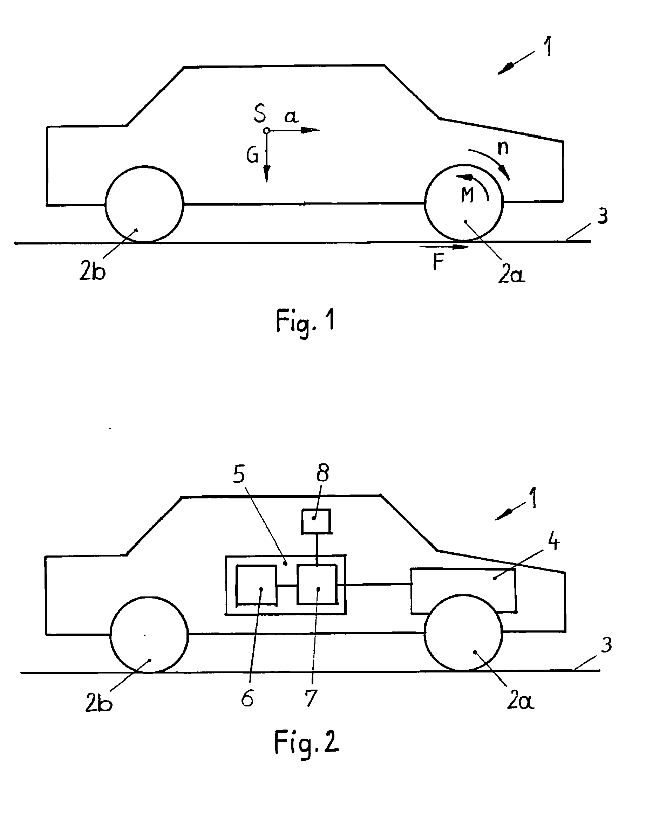

Figur 1 zeigt ein Fahrzeug 1 in Seitenansicht, welches Vorderräder 2a und Hinterräder 2b umfasst, und auf einer Fahrbahn 3 steht. Am Schwerpunkt S des Fahrzeuges 1 greift das Gesamtgewicht G, genauer gesagt die durch die Masse des Fahrzeugs 1 verursachte Gewichtskraft, an. Auf die Vorderräder 2a, welche sich mit der Drehzahl n drehen, wirkt ein Drehmoment M beziehungsweise eine Umfangs- oder Antriebskraft F (es wird angenommen es handelt sich beim Fahrzeug 1 um ein frontgetriebenes Fahrzeug), welche eine Beschleunigung a des Fahrzeugs 1 verursacht. Die Beschleunigungskraft greift wiederum am Schwerpunkt S an.

Figur 2 zeigt das Fahrzeug 1 samt einiger für das folgende Beispiel relevanter Komponenten. Das Fahrzeug 1 umfasst einen Motor 4, eine Messeinheit 5 mit einem integriertem Mikrocontroller 7 und einem damit verbundenen Speicher 6. Über eine Schnittstelle der Messeinheit 5 wird der Mikrocontroller 7 mit im oder am Motor 4 angeordneten Sensoren (nicht dargestellt) verbunden. Darüber hinaus ist die Messeinheit 5 mit einem Beschleunigungssensor 8 verbunden, welcher die auf das Fahrzeug 1 einwirkende Längsbeschleunigung a misst.

Der Speicher 6 kann unter anderem dazu vorgesehen sein, die für das erfindungsgemäße Verfahren nötigen Daten sowie Abläufe zu speichern. In aller Regel wird das Verfahren in Form eines Programms im Speicher 6 abgelegt sein. Der Mikrocontroller 7 liest diesen aus und arbeitet das Verfahren Schritt für Schritt ab. Das Meßsystem 5 kann auch Teil eines Bordcomputers (nicht dargestellt) sein, welcher auch andere Steueraufgaben des Fahrzeuges 1 ausführt. Gegebenenfalls sind die Teile des Überwachungsgerätes dann nicht als physikalische sondern als funktionale Blöcke zu sehen. Der Einfachheit wird aber im folgenden angenommen, es handle sich beim Meßsystem 5 um ein gesondertes Gerät.

Die Funktion des in der Figur 2 dargestellten Meßsystems 5 ist wie folgt:

In einem ersten Schritt a) wird die auf die Räder 2a und 2b des Fahrzeuges 1 wirkende Umfangskraft F oder ein damit in Zusammenhang stehenden Parameters erfasst. Im gezeigten Beispiel wird nicht direkt die Umfangskraft F gemessen, sondern die Gaspedalstellung, die Kraftstoffeinspritzmenge, die Ansaugluftmenge und der Turboladerdruck zur Bestimmung des Motordrehmoments herangezogen. Dies ist prinzipiell durch Einsetzen der ermittelten Messwerte in eine entsprechende Gleichung möglich, meist wird - da der formelmäßige Zusammenhang dieser Parameter doch sehr komplex ist - die Ermittlung des Motordrehmoments mit Hilfe von Motorkennlinien erfolgen, welche beispielsweise mit Hilfe von empirischen Versuchen ermittelt werden können. Liegen Messwerte für die Gaspedalstellung, die Kraftstoffeinspritzmenge, die Ansaugluftmenge und den Turboladerdruck vor, so kann mit Hilfe der erwähnten Kennlinien das Motordrehmoment ermittelt werden. Der erwähnte Parametersatz ist selbstverständlich nur eines von vielen möglichen Beispielen. Für die Ermittlung des Motordrehmoments stehen viele Möglichkeiten zur Verfügung, welche dem Fachmann an sich bekannt sind.

Mit Hilfe des Motordrehmoments und den Getriebeübersetzungen zwischen Motor und Antriebsachse kann das auf die Vorderräder 2a wirkende Drehmoment M und bei bekanntem Radius der Vorderräder die auf die Fahrbahn 3 aufgebrachte Umfangs- oder Antriebskraft F ermittelt werden. Üblicherweise wird dazu auch die Auswertung nötig sein welcher Gang denn eingelegt ist.

In einem zweiten Schritt b) wird nun eine Auswirkung auf das Fahrzeug 1 erfasst, welche durch die einwirkende Umfangskraft F begründet ist. Im vorliegenden Beispiel wird hierzu einfach die Längsbeschleunigung a mit Hilfe des Beschleunigungssensors 8 gemessen und an das Meßsystem 5 weitergemeldet.

In einem dritten Schritt c) wird nun das Fahrzeuggewicht G aus den erfassten Daten berechnet. Liegen Messwerte für die Antriebskraft F und die Längsbeschleunigung a vor, so kann das Gesamtgewicht G des Fahrzeuges 1 mit Hilfe der Formel

$$F = G \cdot a$$

leicht berechnet werden. Dies wird in aller Regel umso genauer erfolgen können, je höher die Beschleunigung a ist, da sich dann Messungenauigkeiten weniger stark auswirken. Allerdings sollten sich die Räder 2a nicht durchdrehen, da dann eine Zuordnung von Motordrehmoment zu Antriebskraft F nur schwierig möglich ist. Besonders vorteilhaft ist es daher entweder nur dann eine Messung durchzuführen, wenn eine Traktionskontrolle des Fahrzeuges 1 ausreichenden Grip der Räder 2a meldet oder dann, wenn ein höherer Gang, beispielsweise der 3. Gang, eingelegt ist. Im dritten Gang sind durchdrehende Räder 2a bei üblicher Motorisierung und guten Fahrbahnverhältnissen so gut wie ausgeschlossen, dennoch ist eine zügige Beschleunigung des Fahrzeugs 1 möglich.

Bei der Berechnung des Fahrzeuggewichts G kann auch die Geschwindigkeit des Fahrzeugs 1 berücksichtigt werden, denn insbesondere bei höheren Geschwindigkeiten wird ein Großteil der Antriebskraft F für die Überwindung des Windwiderstands des Fahrzeugs 1 aufgewendet. Dementsprechend steht für die Beschleunigung des Fahrzeugs 1 ein relativ kleiner Teil der Motorleistung zur Verfügung, welcher bei Erreichen der Höchstgeschwindigkeit des Fahrzeugs 1 überhaupt verschwindet. Vorteilhaft ist es daher, das Gesamtgewicht G bei niedrigen Geschwindigkeiten zu ermitteln.

Desgleichen kann bei der Berechnung des Fahrzeuggewichts G auch die Neigung der Fahrbahn 3 berücksichtigt werden. Diese Neigung kann etwa mit einem Neigungssensor ermittelt werden. Aber auch die Auswertung von Positionsdaten ist möglich, sofern das Fahrzeug 1 über ein Navigationssystem verfügt. Stehen Geländedaten, das heißt die Neigung der Fahrbahn 3 an der gegebenen Position, sowie die Fahrtrichtung zur Verfügung, so kann ebenfalls die Neigung der Fahrbahn 3 ermittelt werden. Bei einer Bergauffahrt wird wiederum ein Großteil der Antriebskraft F zur Überwindung der Hangabtriebskraft aufgewendet, weswegen für die Beschleunigung a des Fahrzeugs 1 nur ein kleiner Teil der Motorleistung zur Verfügung steht. Bergauffahrten sind daher ebenfalls weniger geeignet, das Gesamtgewicht G des Fahrzeugs 1 zu ermitteln.

Insbesondere bei Fahrzuständen, in denen schon ein vergleichsweise hoher Anteil der zur Verfügung stehenden Motorleistung zur Aufrechterhaltung eines statischen Betriebszustands (gleichförmige Bewegung mit hoher Geschwindigkeit oder bergauf) kann die Berücksichtigung einer Differenz einer auf die Vorderräder 2a wirkenden Umfangskraft F vorteilhaft sein. In diesem Fall wird die Formel zur Berechnung der Gesamtgewichts

$$\Delta F = G \cdot a$$

lauten, wobei ΔF die Erhöhung der Antriebskraft F, etwa beim ruckartigen Gasgeben, darstellt.

Neben der direkten Messung der Längsbeschleunigung a ist natürlich auch die Auswertung anderer Auswirkungen der Antriebskraft F auf das Fahrzeug 1 möglich. Durch die erhöhte Lage des Schwerpunkts S verursacht die Beschleunigung a nämlich auch eine Lastverteilung, bei der die Hinterachse stärker, die Vorderachse jedoch geringer belastet wird. Diese Laständerung kann gemessen und für die Berechnung des Gesamtgewichts G des Fahrzeugs 1 herangezogen werden. Beispielsweise können dazu Sensoren zur Ermittlung der Achslast, des Einfederwegs an einem passiven Stoßdämpfer, der Kraftänderung in einem aktiven Stoßdämpfer, oder der Änderung der Leuchtweite der Scheinwerfer vorgesehen sein. Zwar ermöglichen diese Sensoren oft ohnehin die Ermittlung des Gesamtgewichts, dennoch kann die Anwendung des erfindungsgemäßen Verfahrens vorteilhaft sein, denn die Ermittlung des Gesamtgewichts G erfolgt nicht in einem *statischen* sondern einem *dynamischen* Fahrzustand. So können Nichtlinearitäten, ein Offset sowie Hystereseeffekte eines Sensors besser ausgemittelt werden. Als Beispiel sei hier der Einfederweg an einem Stoßdämpfer genannt, der einer ausgeprägten Hysterese unterworfen ist. Erst bei Überwindung der Haftreibung der an einem Dreieckslenker bewegten Teile federt der Stoßdämpfer ein aber schon bei Unterschreiten der Gleitreibung wird die Bewegung wieder gestoppt. Die Auswertung des Einfederwegs in einem statischen Betriebszustands des Fahrzeuges 1 führt daher mit hoher Wahrscheinlichkeit zu einem verfälschten Messergebnis wohingegen die *Änderung* des Einfederwegs eine relativ genaue Bestimmung der Radlast ermöglicht.

Denkbar ist auch, die Umfangskraft F nicht aufgrund der zugeführten Leistung sondern aufgrund der abgeführten Leistung, also beim Bremsen zu messen. Als Bremsen kommen dabei Scheiben- und Trommelbremsen aber auch Motorstau- und Wirbelstrombremsen in Betracht. Die Ermittlung des Gesamtgewichts G des Fahrzeugs 1 ist analog wie bei der zugeführten Leistung, lediglich die Vorzeichen kehren sich um. Die Bremskraft kann dabei etwa über einen Kraftsensor ermittelt werden, welcher am Bremssattel angebracht ist. Auch der Bremsdruck kann als mit der Umfangskraft F in Zusammenhang stehender Parameter herangezogen werden. Schließlich kann auch die Erwärmung der Bremsscheiben in die Berechnung einfließen, da die dem Fahrzeug 1 abgeführte Energie in Wärme umgesetzt wird. Hier werden vor allem die zeitlichen Integrale der einzelnen Parameter eine Rolle spielen. Das zeitliche Integral der Auswirkung auf das Fahrzeug 1, welche durch die einwirkende Umfangskraft F begründet ist, steht dabei in Zusammenhang der Temperaturdifferenz an der Bremsscheibe, welche durch die dem Fahrzeug 1 abgeführte kinetische Energie verursacht wird. Beispielsweise können also Integrale der Schwankungen der Achslasten mit der Temperaturdifferenz an der Bremsscheibe in Verbindung gebracht werden.

Schließlich ist es auch möglich, dass bei der Berechnung der Fahrzeuggewichts G Lenkkräfte berücksichtigt werden. Eine hohe Beladung des Fahrzeugs 1 verursacht höhere Lenkkräfte, welche beispielsweise über die Servolenkung ermittelt werden können. Insbesondere bieten aktive Lenkungen, bei denen der Fahrer beim Lenken durch einen Elektromotor (z.B. an der Lenksäule) unterstützt wird, eine gute Möglichkeit hierfür, da über die Stromaufnahme des Elektromotors auf die Höhe der Lenkkräfte geschlossen werden kann.

Als Konsequenz eines hohen oder zu hohen Gesamtgewichts G des Fahrzeuges 1 kann ein Warnhinweis an den Fahrer ausgegeben werden, etwa "Sie haben Ihr Fahrzeug zu 95% beladen. Bitte passen Sie Ihre Fahrweise daran an." Beispielsweise kann auch die Höchstgeschwindigkeit des Fahrzeugs 1 limitiert werden, etwa auf 100 km/h bei einem Gewicht G von über 90% des zulässigen Gesamtgewichts. Selbstverständlich ist auch eine Adaptierung eines Antiblockiersystems und eines Stabilitätsprogramms (ESP) möglich. Letzteres kann bei einem stark beladenen Fahrzeug 1 schon früher eingreifen, sodass kritische Fahrzustände tunlichst vermieden werden. Auch die Lenkung kann auf das Gewicht G des Fahrzeugs 1 eingestellt werden. So ist bei hohem Fahrzeuggeweicht G zum Beispiel eine höhere Servo-Wirkung der Lenkung vorstellbar, sodass der Fahrer nicht durch die hohen Lenkkräfte belastet wird. Auch kann die Gegenkraft eines aktiven Gaspedals erhöht werden, um dem Fahrer die Gefährlichkeit einer hohen Geschwindigkeit zu signalisieren. Desgleichen kann die von einem Bremspedal erzeugte Gegenkraft gesenkt werden, um den Fahrer beim Bremsen zu unterstützen.

Als letzte radikale Maßnahme ist bei Überschreitung des zulässigen Gesamtgewichts des Fahrzeugs 1 auch die Außerbetriebnahme desselben vorstellbar. Wird ein Überschreiten des zulässigen Gewichts festgestellt, so wird erst ein Warnhinweis an den Fahrer ausgegeben, zum Beispiel "Bitte Fahrzeug entladen, um eine automatische Außerbetriebnahme zu vermeiden." Reagiert der Fahrer nicht auf diesen Hinweis, zum Beispiel innerhalb einer festgelegten Zeitspanne, so kann das Fahrzeug 1 beim nächsten Anhalten außer Betrieb genommen werden, etwa durch Unterbrechen der Zündung oder der Kraftstoffzufuhr. Um eine derartige Maßnahme nicht schon bei geringer Überschreitung des zulässigen Gesamtgewichts einzuleiten, kann auch vorgesehen sein, dass die Außerbetriebnahme beispielsweise erst bei einer Gewichtsüberschreitung von 20% ausgelöst wird.

## Bezugszeichenliste

| | |
|---|---|
| 1 | Fahrzeug |
| 2a..2b | Räder |
| 3 | Fahrbahn |
| 4 | Motor |
| 5 | Messeinheit |
| 6 | Speicher |
| 7 | Mikrocontroller |
| 8 | Beschleunigungssensor |
| a | Beschleunigung des Fahrzeugs 1 |
| F | Antriebs- oder Umfangskraft an den Rädern 2a |
| G | Fahrzeuggewicht |
| M | Drehmoment an den Rädern 2a |
| n | Drehzahl der Räder 2a |
| S | Schwerpunkt |

## Patentansprüche

1. Verfahren zur Bestimmung des Gewichts (G) eines Fahrzeugs (1), umfassend die Schritte:

a) Erfassen einer auf die Räder (2a, 2d) des Fahrzeuges (1) wirkenden Umfangskraft (F) oder eines damit in Zusammenhang stehenden Parameters;

b) Erfassen zumindest einer Auswirkung auf das Fahrzeug (1), welche durch die einwirkende Umfangskraft (F) begründet ist und

c) Berechnen des Fahrzeuggewichts (G) aus den erfassten Daten.

2. Verfahren nach Anspruch 1,
**dadurch gekennzeichnet,**
**dass** als ein mit der Umfangskraft (F) in Zusammenhang stehender Parameter einer oder mehrere aus der Gruppe: Motordrehmoment, Motorleistung, Getriebedrehmoment, Gaspedalstellung, Kraftstoffeinspritzmenge, Ansaugluftmenge, Druckverlust im Luftfilter, Turboladerdruck, eingelegter Gang, Bremsdruck, Kraft am Bremspedal oder Temperatur der Bremsen vorgesehen ist.

3. Verfahren nach einem der Ansprüche 1 oder 2,
**dadurch gekennzeichnet,**
**dass** als Auswirkung auf das Fahrzeug (1) eine oder mehrere aus der Gruppe: Längsbeschleunigung (a), Veränderung der Radlast, Veränderung der Achslast, Änderung eines Einfederwegs an einem passiven Stoßdämpfer, Kraftänderung in einem aktiven Stoßdämpfer, Änderung der Leuchtweite eines Scheinwerfers vorgesehen ist.

4. Verfahren nach einem der Ansprüche 1 bis 3, wobei anstelle der auf die Räder (2a, 2b) des Fahrzeugs (1) wirkenden Umfangskraft (F) oder eines damit in Zusammenhang stehenden Parameters dessen zeitliche Veränderung erfasst wird.

5. Verfahren nach einem der Ansprüche 1 bis 4,
**dadurch gekennzeichnet,**
**dass** bei der Berechnung der Fahrzeuggewichts (G) die Geschwindigkeit des Fahrzeuges (1) berücksichtigt wird.

6. Verfahren nach einem der Ansprüche 1 bis 5,
**dadurch gekennzeichnet,**
**dass** die Steigung der Fahrbahn, auf dem sich das Fahrzeug (1) befindet, mit Hilfe eines Neigungssensors oder mit Hilfe von Daten eines Navigationssystems des Fahrzeuges (1) erfasst und bei der Berechnung der Fahrzeuggewichts (G) berücksichtigt wird.

7. Verfahren nach einem der Ansprüche 1 bis 6,
**dadurch gekennzeichnet,**
**dass** bei der Berechnung der Fahrzeuggewichts (G) Lenkkräfte berücksichtigt werden.

8. Verfahren nach einem der Ansprüche 1 bis 7,

**dadurch gekennzeichnet,**
**dass** bei Überschreiten eines Grenzwerts für das Fahrzeuggewicht (G) eine oder mehrer Maßnahmen aus der Gruppe: Ausgabe eines Warnhinweises an den Fahrer, Begrenzung der Höchstgeschwindigkeit des Fahrzeugs (1), Adaptierung eines Antiblokkiersystems, Adaptierung eines Elektronischen Stabilitätsprogramms, Adaptierung der Lenkung, Verändern der von einem Gaspedal erzeugten Gegenkraft, Verändern der von einem Bremspedal erzeugten Gegenkraft oder Außerbetriebnahme des Fahrzeuges (1) getroffen werden.

9. Messeinheit (5) zur Bestimmung des Gewichts (G) eines Fahrzeugs (1), umfassend:

a) Mittel zum Erfassen einer auf die Räder (2a, 2d) des Fahrzeuges (1) wirkenden Umfangskraft (F) oder eines damit in Zusammenhang stehenden Parameters;

b) Mittel zum Erfassen zumindest einer Auswirkung auf das Fahrzeug (1), welche durch die einwirkende Umfangskraft (F) begründet ist und

c) Mittel zum Berechnen des Fahrzeuggewichts (G) aus den erfassten Daten.

10. Messeinheit (5) nach Anspruch 9,
**dadurch gekennzeichnet,**
**dass** als ein mit der Umfangskraft (F) in Zusammenhang stehender Parameter einer oder mehrere aus der Gruppe: Motordrehmoment, Motorleistung, Getriebedrehmoment, Gaspedalstellung, Kraftstoffeinspritzmenge, Ansaugluftmenge, Druckverlust im Luftfilter, Turboladerdruck, eingelegter Gang, Bremsdruck, Kraft am Bremspedal oder Temperatur der Bremsen vorgesehen ist.

11. Messeinheit (5) nach einem der Ansprüche 9 bis 10,
**dadurch gekennzeichnet,**
**dass** als Auswirkung auf das Fahrzeug (1) eine oder mehrere aus der Gruppe: Längsbeschleunigung (a), Veränderung der Radlast, Veränderung der Achslast, Änderung eines Einfederwegs an einem passiven Stoßdämpfer, Kraftänderung in einem aktiven Stoßdämpfer, Änderung der Leuchtweite eines Scheinwerfers vorgesehen ist.

12. Messeinheit (5) nach einem der Ansprüche 9 bis 11,
**dadurch gekennzeichnet,**
**dass** die Mittel zum Berechnen des Fahrzeuggewichts (G) in einem Halbleiterbaustein angeordnet sind und die Erfassungsmittel zumindest einen Eingang und/oder eine Funkempfangsmodul desselben darstellen.

Fig. 1

Fig. 2

8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006033951 A1
- DE 10341132 A1
- DE 4408762
- DE 19536688 C2
- DE 102004031224 A1